(19) **Europäisches Patentamt / European Patent Office / Office européen des brevets**

(11) **EP 4 592 006 A1**

(12) **EUROPEAN PATENT APPLICATION**
published in accordance with Art. 153(4) EPC

(43) Date of publication:
30.07.2025 Bulletin 2025/31

(21) Application number: 23868272.8

(22) Date of filing: 21.09.2023

(51) International Patent Classification (IPC):
B22F 1/00 (2022.01)      B22F 10/28 (2021.01)
B22F 10/64 (2021.01)      B22F 10/66 (2021.01)
B33Y 70/00 (2020.01)      B33Y 80/00 (2015.01)
C22C 33/02 (2006.01)      C22C 38/00 (2006.01)
C22C 38/46 (2006.01)

(52) Cooperative Patent Classification (CPC):
B22F 1/00; B22F 10/28; B22F 10/64; B22F 10/66;
B33Y 70/00; B33Y 80/00; C22C 33/02;
C22C 38/00; C22C 38/46

(86) International application number:
PCT/JP2023/034368

(87) International publication number:
WO 2024/063151 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.09.2022 JP 2022150745

(71) Applicant: Proterial, Ltd.
Tokyo 135-0061 (JP)

(72) Inventors:
• SAITO, Daiki
Tokyo 135-0061 (JP)
• FUKUZAWA, Norihide
Tokyo 135-0061 (JP)
• KATAOKA, Kouta
Tokyo 135-0061 (JP)

(74) Representative: Becker, Eberhard
Becker Kurig & Partner
Patentanwälte mbB
Bavariastraße 7
80336 München (DE)

(54) **HOT WORK TOOL STEEL POWDER FOR ADDITIVE FABRICATION AND ADDITIVELY FABRICATED HOT WORK TOOL STEEL OBJECT**

(57) Provided is hot work tool steel powder for additive fabrication with which an additively fabricated hot work tool steel object having excellent crack resistance during fabrication can be fabricated. The hot work tool steel powder for additive fabrication and the additively fabricated hot work tool steel object comprise: 0.10% to 0.25% both inclusive of C, 0.01% to 0.5% both inclusive of Si, 1.5% or less of Mn, 3.0% to 6.0% both inclusive of Cr, 2.0% to 3.5% both inclusive of one or two of Mo and W according to a relational expression (Mo + 1/2W), 0.3% to 0.7% both inclusive of V, 0% to 0.5% both inclusive of Ni, 0% to 0.25% both inclusive of Cu by mass, and the balance being Fe and unavoidable impurities; and satisfy an equation (1): C + Si/30 + (Mn + Cr + Cu)/20 + Ni/60 + (Mo + 1/2W)/15 + V/10 ≤ 0.75.

1 mm

FIG. 1

EP 4 592 006 A1

## Description

Technical Field

The present invention relates to hot work tool steel powder for additive manufacturing and an additively manufactured hot work tool steel object.

Related Art

Hot work tool steel, such as hot forging molds and die casting molds, requires characteristics of high-temperature strength, toughness, and wear resistance for contact with high-temperature workpieces. Conventionally, to satisfy these requirements, JIS steel grade SKD61 or improved steel of SKD61 has been applied to hot work tool steel.

Recently, additive manufacturing methods have been attracting attention as means to easily form metal products (parts) with complex shapes in near-net shapes. Generally, an additive manufacturing method is also called 3D printing, which is an additive manufacturing technique. As the types of additive manufacturing methods, there are, for example, a powder spray method in which metal powder is irradiated with a heat source and melted while layering, and a powder bed method in which metal powder filled on a stage is irradiated with a heat source and melted, and the work of solidifying this is repeated to build up layers. According to the additive manufacturing method, metal products with complex shapes can be manufactured with significant reduction of conventional machining processes, which makes it possible to use a metal material with low workability. Since a metal material with low workability is also primarily a high-strength metal material, it can manufacture metal products with complex shapes and long durability.

Further, an additively manufactured object manufactured by the above-mentioned additive manufacturing method using hot work tool steel as the metal material has been proposed. For example, Patent Literature 1 proposes an additively manufactured hot work tool that is characterized by having a component composition including, by mass%, C: 0.3% to 0.5%, Si: 2.0% or less, Mn: 1.5% or less, P: 0.05% or less, S: 0.05% or less, Cr: 3.0% to 6.0%, one or two of Mo and W according to the relationship formula (Mo + 1/2W): 0.5% to 3.5%, V: 0.1% to 1.5%, Ni: 0% to 1.0%, Co: 0% to 1.0%, and Nb: 0% to 0.3%, with the remainder being Fe and unavoidable impurities, in which the area ratio of defects having an area of 1 $\mu m^2$ or more in a cross-section parallel to the layering direction is 0.6% or less.

Patent Literature 2 discloses steel powder that aims to achieve both high thermal conductivity and high corrosion resistance, characterized by having a composition of, by mass%, $0.10 \leqq C < 0.25$, $0.005 \leqq Si \leqq 0.600$, $2.00 \leqq Cr \leqq 6.00$, $-0.0125 \times [Cr] + 0.125 \leqq Mn \leqq -0.100 \times [Cr] + 1.800$ ... formula (1) (where [Cr] in formula (1) represents the content mass% of Cr), $0.01 \leqq Mo \leqq 1.80$, $-0.00447 \times [Mo] + 0.010 \leqq V \leqq -0.1117 \times [Mo] + 0.901$ ... formula (2) (where [Mo] in formula (2) represents the content mass% of Mo), and $0.0002 \leqq N \leqq 0.3000$, with the remainder being Fe and unavoidable impurities.

Citation List

Patent Literatures

Patent Literature 1: International Publication No. 2019/220917
Patent Literature 2: Japanese Patent Application Laid-Open No. 2016-145407

SUMMARY OF INVENTION

Problems to be Solved by the Invention

As described above, several steels for additive manufacturing have been proposed, but cracks may occur during manufacturing depending on the types of manufacturing machines, manufacturing conditions, manufacturing dimensions, etc. For example, large-scale additive manufacturing molds or additive manufacturing molds having stress concentration portions (recessed portions) tend to be susceptible to cracking.

Therefore, an objective of the present invention is to provide hot work tool steel powder for additive manufacturing that can obtain an additively manufactured hot work tool steel object capable of further improving crack resistance during manufacturing.

Means for Solving the Problems

The present invention has been made in view of the above-mentioned problems.

That is, one aspect of the present invention is hot work tool steel powder for additive manufacturing, including, by mass%, C: 0.10% to 0.25%, Si: 0.01% to 0.5%, Mn: 1.5% or less, Cr: 3.0% to 6.0%, one or two of Mo and W according to a relationship formula (Mo + 1/2W): 2.0% to 3.5%, V: 0.3% to 0.7%, Ni: 0% to 0.5%, Cu: 0% to 0.25%, and a remainder: Fe and unavoidable impurities, and satisfying formula (1): C + Si/30 + (Mn + Cr + Cu)/20 + Ni/60 + (Mo + 1/2W)/15 + V/10 ≦ 0.75 (each element symbol in formula (1) represents a content (mass%) of the element).

In addition, another aspect of the present invention is an additively manufactured hot work tool steel object, including, by mass%, C: 0.10% to 0.25%, Si: 0.01% to 0.5%, Mn: 1.5% or less, Cr: 3.0% to 6.0%, one or two of Mo and W according to a relationship formula (Mo + 1/2W): 2.0% to 3.5%, V: 0.3% to 0.7%, Ni: 0% to 0.5%, Cu: 0% to 0.25%, and a remainder: Fe and unavoidable impurities, and satisfying formula (1): C + Si/30 + (Mn + Cr + Cu)/20 + Ni/60 + (Mo + 1/2W)/15 + V/10 ≦ 0.75.

Effects of the Invention

According to the present invention, it is possible to obtain hot work tool steel powder for additive manufacturing that is capable of manufacturing an additively manufactured hot work tool steel object with excellent crack resistance during manufacturing.

BRIEF DESCRIPTION OF DRAWINGS

[FIG. 1] is a cross-sectional observation photograph parallel to the layering direction of the additively manufactured hot work tool steel object according to an example of the present invention.
[FIG. 2] is a cross-sectional observation photograph parallel to the layering direction of the additively manufactured hot work tool steel object according to a comparative example.
[FIG. 3] is a cross-sectional observation photograph parallel to the layering direction of the additively manufactured hot work tool steel object according to another comparative example.

DESCRIPTION OF EMBODIMENTS

The present invention has a component composition including, by mass%, C: 0.10% to 0.25%, Si: 0.01% to 0.5%, Mn: 1.5% or less, Cr: 3.0% to 6.0%, one or two of Mo and W according to a relationship formula (Mo + 1/2W): 2.0% to 3.5%, V: 0.3% to 0.7%, Ni: 0% to 0.5%, Cu: 0% to 0.25%, and a remainder: Fe and unavoidable impurities. First, the reasons for limiting the composition of the hot work tool steel powder for additive manufacturing specified in the present invention will be described. Unless otherwise specified, "%" represents "mass%".

C: 0.10% to 0.25%

C is a basic element of a hot work tool that partially dissolves in a matrix to provide strength, and partially forms carbide to enhance wear resistance and seizure resistance. Additionally, in a case where C dissolved as an interstitial atom is added together with substitutional atoms having high affinity with C such as Cr, C is an element expected to contribute to the I (interstitial atom)-S (substitutional atom) effect (acting as drag resistance of solute atoms, functioning to strengthen the hot work tool), and is also an element capable of enhancing hardenability. If C is too low, primarily ferrite phase forms during solidification, and the main phase becomes ferrite phase at room temperature, making quenching, which requires rapid cooling from austenite phase, impossible. If the main phase from immediately after solidification to room temperature is ferrite phase, it becomes impossible to mitigate thermal shrinkage by utilizing martensite transformation expansion, thus making cracking more likely to occur. However, as C increases, toughness decreases while hardness improves, which promotes susceptibility to cracking during manufacturing. In the present invention, with the aim to improve crack resistance while maintaining hardness sufficient for mold use, C is set to 0.10% to 0.25%. C is preferably 0.12% or more, and more preferably 0.15% or more. In addition, C is preferably 0.22 or less, and more preferably 0.19% or less.

Si: 0.01% to 0.5%

Si can be used as a deoxidizing agent when adjusting the component composition of molten steel, and since it is difficult to manufacture without adding Si, Si is set to 0.01% or more. On the other hand, too much Si leads to the formation of ferrite in the tool structure after tempering. Therefore, Si is set to 0.5% or less. Preferably, Si is 0.4% or less. More preferably, Si is 0.3% or less.

Mn: 1.5% or less

Mn, if excessive, increases the viscosity of the matrix and reduces the machinability of the material. Therefore, Mn is set to 1.5% or less. Preferably, Mn is 1.0 or less. More preferably, Mn is 0.75% or less, and even more preferably 0.7% or less. On the other hand, Mn has the effects of enhancing hardenability, suppressing the formation of ferrite in the tool structure, and obtaining appropriate quenching and tempering hardness. To obtain these effects, a content of 0.1% or more is preferable. More preferably, Mn is 0.25% or more. Even more preferably, Mn is 0.45% or more, and still more preferably 0.55% or more.

Cr: 3.0% to 6.0%

Cr is a basic element of a hot work tool that enhances hardenability, forms carbide, and has the effects of strengthening the matrix and improving wear resistance and toughness. However, too much Cr leads to a decrease in hardenability and high-temperature strength. Therefore, Cr is set to 3.0% to 6.0%. Preferably, Cr is 5.5% or less. More preferably, Cr is 5.0% or less. Even more preferably, Cr is 4.5% or less, and still more preferably 4.3% or less. Also, preferably, Cr is 3.5% or more. More preferably, Cr is 3.6% or more, even more preferably 3.7% or more, and still more preferably 4.0% or more.

One or two of Mo and W according to the relationship formula (Mo + 1/2W): 2.0% to 3.5%

Mo and W can be included individually or in combination to impart strength by precipitating or agglomerating fine carbide through tempering, and to improve softening resistance and high-temperature strength. In the present invention, as C is lowered to improve crack resistance, it can be expected that strength is complemented by including at least 2.0% or more of Mo and W. In this case, the content can be specified together in terms of Mo equivalent defined by the relationship formula (Mo + 1/2W), since W has about twice the atomic weight of Mo (of course, either one may be included alone, or both may be included together). To obtain the above effects, the value according to the relationship formula (Mo + 1/2W) is set to 2.0% or more. More preferably, the value is 2.1% or more. However, Mo and W, if excessive, may lead to a decrease in machinability and toughness, resulting in reduced crack resistance, and because Mo and W have high melting points which increase the difficulty of melting, a large amount of content is not preferable for manufacturing. Therefore, the value according to the relationship formula (Mo + 1/2W) is set to 3.5% or less. More preferably, the value is 3.0% or less, and even more preferably 2.5% or less.

V: 0.3% to 0.7%

V has the effect of forming vanadium carbide, which strengthens the matrix and improves wear resistance and tempering softening resistance. In a case where "quenching" is performed by heating an additively manufactured product formed in the additive manufacturing process to the quenching temperature, the above-mentioned vanadium carbide also acts as a "pinning particle" that suppresses the coarsening of austenite crystal grains during quenching heating, and contributes to improvement of toughness. However, since V has high carbide-forming ability, if there is too much V, all C may become vanadium carbide, making it impossible to form other carbides. Since tool steel is established by the presence of multiple types of carbides, it is not desirable to have only vanadium carbide. Therefore, V is set to 0.3% to 0.7%. Preferably, V is 0.4 or more, and more preferably 0.5% or more. Also, preferably, V is 0.6% or less.

Ni: 0% to 0.5%

Ni is an element that suppresses the formation of ferrite in the tool structure. In addition, together with C, Cr, Mn, Mo, W, etc., Ni is an effective element for imparting excellent hardenability to the tool material, and forming a martensite-based structure even in a case where the cooling rate during quenching is moderate to prevent a decrease in toughness. Furthermore, since Ni also improves the intrinsic toughness of the matrix, Ni may be included as needed in the present invention. In a case where Ni is included, Ni is preferably 0.1% or more. However, excessive Ni is an element that increases the viscosity of the matrix and decreases machinability. Therefore, even in a case of including Ni, Ni is set to 0.5% or less. Preferably, Ni is 0.3% or less, and more preferably 0.2% or less.

Remainder: Fe and unavoidable impurities

The remainder is Fe and unavoidable impurities. Examples of unavoidable impurities include elements such as P, S, Cu, Al, Ca, Mg, O (oxygen), N (nitrogen), and B (boron), and it is preferable that these elements are as low as possible. However, on the other hand, a small amount may be included in order to obtain additional effects such as control of inclusion morphology, other mechanical properties, and improvement of manufacturing efficiency. In this case, the ranges of Al ≦ 0.04%, Ca ≦ 0.01%, Mg ≦ 0.01%, O ≦ 0.05%, N ≦ 0.05%, and B ≦ 0.05% are sufficiently acceptable and are the preferred regulatory upper limits of the present invention. For Al, more preferably, Al is 0.025% or less. In particular, Cu needs to be regulated to 0.25% or less in terms of suppressing cracking during additive manufacturing as described later. Also, P and S can follow the JIS steel grade SKD61, for example, P ≦ 0.030% and S ≦ 0.020%.

$$\text{Formula (1): } C + Si/30 + (Mn + Cr + Cu)/20 + Ni/60 + (Mo + 1/2W)/15 + V/10 \leqq 0.75$$

In addition to the component specification, one of the characteristics of the present invention is to adjust the left side of the above formula (1) to 0.75 or less. The left side of formula (1) is a modified version of Pcm, which is used as a cold cracking susceptibility index for welding, and C, Si, Mn, Cr, Cu, Ni, Mo, W, and V in formula (1) indicate the content (mass%) of each element. The occurrence of cracking is also a problem in welding, similar to additive manufacturing, and since both involve molten solidified structures, it was found that the index can be applied to crack suppression in additive manufacturing, and was applied to the present invention. Here, while HCS, a hot cracking index, is also known as a welding cracking index, from preliminary studies, the manufacturing cracks in this composition system were largely cracked from the surface, and the morphology was different from hot cracks that tend to occur at solidification interfaces, etc. Since the manufacturing cracks in this composition system are observed in portions where tensile stress due to thermal shrinkage is likely to occur, the cracks are occurring at low temperatures, and thus are presumed to be similar to cold cracking in welding, and in the present invention, Pcm, which is a cold cracking index, was applied. By adjusting each main component so that the left side of formula (1) becomes 0.75 or less, powder that is capable of further suppressing cracking during manufacturing can be obtained. The preferred upper limit of Pcm is 0.70.

The hot work tool steel powder for additive manufacturing of the present invention can be manufactured by, for example, a gas atomization method, a water atomization method, a disk atomization method, a plasma atomization method, a rotating electrode method, etc. Among these, the gas atomization method is a method in which molten raw materials prepared to have the desired component composition are heated above the melting points thereof by high-frequency induction heating, and after melting, the molten metal flowing out through fine holes is finely crushed by injecting inert gas such as argon gas or nitrogen gas to the molten metal, and the powder is obtained by rapid cooling and solidification. This gas atomization method can use scrap metal or crude metal raw materials as the molten raw materials, and compared to the plasma atomization method or rotating electrode method which require preparation of raw materials with desired component composition and shape in advance, the gas atomization method can manufacture hot work tool steel powder at a lower cost, making it suitable as a method for obtaining the metal powder for additive manufacturing of the present invention.

The hot work tool steel powder for additive manufacturing of the present invention preferably has a 50% particle size in the cumulative particle size distribution on a volume basis (hereinafter referred to as "D50") of 10 μm to 250 μm. By setting D50 of the metal powder for additive manufacturing of the present invention to 250 μm or less, melting of the powder becomes easier, and the formation of internal defects in the additively manufactured object can be suppressed.

In addition, by setting D50 of the metal powder for additive manufacturing of the present invention to 10 μm or more, the metal powder becomes less susceptible to the influence of moisture and other factors in the atmosphere during handling and additive manufacturing, and good flowability can be secured.

The cumulative particle size distribution in the powder for manufacturing of the present invention is expressed as a cumulative volume particle size distribution, and the D50 thereof can be displayed as a measured value by the laser diffraction scattering method specified in JIS Z 8825.

The hot work tool steel powder for additive manufacturing of the present invention may have the D50 of metal powder adjusted by sieve classification using a mesh or air classification, etc., in accordance with the above-mentioned methods. For example, metal powder for additive manufacturing used in the powder bed method needs to have coarse metal powder that is difficult to melt removed in order to minimize the range of heat influence, while melting the metal powder with a laser beam as the heat source. In addition, fine metal powder with high adhesiveness needs to be removed in order to obtain optimal flowability for ensuring the laying of the metal powder. Therefore, in the case of applying the maraging steel powder for additive manufacturing of the present invention to the powder bed method, it is preferable to adjust the D50 to a range of 10 μm to 53 μm. The preferred upper limit of D50 is 40 μm, and the preferred lower limit of D50 is 20 μm.

By additively manufacturing the above-mentioned hot work tool steel powder for additive manufacturing of the present invention using the manufacturing method described later, an additively manufactured hot work tool steel object can be obtained that includes, by mass%, C: 0.10% to 0.25%, Si: 0.01% to 0.5%, Mn: 1.5% or less, Cr: 3.0% to 6.0%, one or two of Mo and W according to the relationship formula (Mo + 1/2W): 2.0% to 3.5%, V: 0.3% to 0.7%, Ni: 0% to 0.5%, Cu: 0% to 0.25%, and the remainder: Fe and unavoidable impurities, and satisfies formula (1): C + Si/30 + (Mn + Cr + Cu)/20 + Ni/60 + (Mo + 1/2W)/15 + V/10 + ≦ 0.75. This additively manufactured object excels in being resistant to manufacturing cracking and having good high-temperature strength and room-temperature ductility and toughness. Here, the high-temperature strength in the present invention can be evaluated by 0.2% proof stress obtained from a tensile test at a high-temperature environment of 550°C using a test specimen tempered to a hardness of 44±2 HRC, and is preferably 900 MPa or more. The more preferred lower limit of 0.2% proof stress is 930 MPa, and the even more preferred lower limit of 0.2% proof stress is 950 MPa. In addition, the room-temperature ductility and toughness in the present invention can be evaluated by the reduction of area and Charpy impact value obtained from a tensile test in a room-temperature (for example: 22°C) environment using a test specimen tempered to a hardness of 44±2 HRC. The preferred reduction of area is 60% or more, and more preferably 63% or more. Also, the preferred Charpy impact value is 30 J/cm$^2$ or more, more preferably 50 J/cm$^2$ or more, even more preferably 80 J/cm$^2$ or more, and particularly preferably 100 J/cm$^2$ or more. The above-mentioned 0.2% proof stress and reduction of area can be measured by tensile tests based on JIS Z 2241, and the Charpy impact value can be measured by 2mmU notch Charpy impact tests based on JIS Z 2242.

This additively manufactured object is most preferably applied to a die casting mold, but may also be applicable to other molds such as plastic molds that require internal cooling mechanisms. Additionally, this additively manufactured object may be applicable to the repair of molds using additive manufacturing of the powder spray method.

Next, an example of the manufacturing processes that can obtain the additively manufactured object of the present invention using the hot work tool steel powder for additive manufacturing of the present invention will be described in order. The manufacturing processes described below assumes the powder bed method unless otherwise specified.

The manufacturing method according to the present invention includes a process of filling the prepared hot work tool steel metal powder for additive manufacturing of the present invention (hereinafter also referred to as "metal powder") in a layered manner, and a process of sequentially melting the filled metal powder with a scanning heat source having a diameter larger than the D50 of the metal powder, and forming a solidified layer by solidifying the metal powder. Then, the additively manufactured product of the present invention can be produced by repeating the process of filling the metal powder in a layered manner and the process of forming the solidified layer to form multiple layered solidified layers. For example, a laser or electron beam can be utilized as the scanning heat source. It is preferable to make the diameter of this scanning heat source larger than the D50 of the metal powder so that the collection of metal powder can be melted uniformly.

In the manufacturing method according to the present invention, when irradiating laser while scanning the above-mentioned metal powder, the laser output can be set to 50 W to 350 W, the scanning speed can be set to 200 mm/second to 2000 mm/second, and the scanning pitch can be set to 0.02 mm to 0.20 mm. Here, if the layering thickness per scan of the laser is too large, it becomes difficult for heat to transfer throughout the filled metal powder during laser irradiation, and the metal powder does not melt sufficiently, which promotes the generation of internal defects. On the other hand, if the layering thickness per scan is too small, the number of layers required to reach the predetermined size of the additively manufactured object increases, which prolongs the time required for the additive manufacturing process. Therefore, it is preferable that the layering thickness per scan is 10 μm to 200 μm. The more preferred lower limit of the layering thickness is 20 μm, and the more preferred upper limit of the layering thickness is 100 μm. Although a preheating process may be implemented before the above-mentioned additive manufacturing process, since the powder of the present invention has improved crack resistance compared to conventional hot work tool steel powder, it is possible to omit the preheating before additive manufacturing, for example, as long as the manufactured object is small and has few stress concentration portions.

In the manufacturing method according to the present invention, in order to impart the mechanical properties necessary for use as a metal product, it is preferable to apply tempering treatment at a temperature of 500°C to 700°C to the member as additively manufactured (a state after additive manufacturing without heat treatment). By performing tempering, the product can be finished into an "additively manufactured hot work tool" having a predetermined hardness. During this period, the above-mentioned additively manufactured product can be shaped into a hot work tool through various machining processes such as cutting and drilling. In this case, annealing can be performed on the additively manufactured product formed in the above-mentioned additive manufacturing process to facilitate machining. Annealing can also be expected to bring the effect of refining vanadium carbide in the structure of the additively manufactured hot work tool after tempering. Then, finishing machining may also be performed after tempering. Further, depending on the circumstances, this finishing machining can also be combined, and the above-mentioned machining processes can be performed collectively on the additively manufactured product after tempering to finish the additively manufactured product into an additively manufactured hot work tool product.

It should be noted that quenching can be performed before the above-mentioned tempering. And, regardless of whether annealing is performed or not, or before or after annealing, normalizing can be performed on the additively manufactured product formed in the additive manufacturing process.

The tempering temperature varies depending on the target hardness, etc., but is generally about 500°C to 700°C. Additionally, in the case of performing quenching before tempering, the quenching temperature is generally about 900°C to 1100°C. For example, in the case of SKD61 which is a representative JIS steel grade of hot work tool steel, the quenching temperature is about 1000°C to 1030°C, and the tempering temperature is about 550°C to 650°C.

Then, it is preferable that the tempering hardness is 50 HRC (Rockwell hardness) or less or 520 HV (Vickers hardness) or less. More preferably, the tempering hardness is 48 HRC or less or 500 HV or less. Moreover, it is preferable that the tempering hardness is 40 HRC or more or 380 HV or more. More preferably, the tempering hardness is 42 HRC or more or 400 HV or more. It should be noted that in the present invention, hardness can be measured in accordance with the measurement method described in JIS Z 2245 "Rockwell hardness test - Test method" or JIS Z 2244-1 "Vickers hardness test - Part 1: Test method", and Rockwell C scale hardness (HRC) or Vickers hardness (HV) can be used.

EXAMPLES

(Example 1)

After preparing each crude metal raw material to have the component composition shown in Table 1, the metal raw materials were charged into a high-frequency induction melting furnace and melted, and gas atomized powder was obtained by crushing the molten metal with argon gas. The values (Pcm) of formula (1) for each sample are also shown in Table 1. The particle size of the obtained atomized powder was adjusted by sieve classification using a mesh and air classification to obtain powder for additive manufacturing for the examples of the present invention and the comparative examples with a D50 of 35 μm. With the obtained metal powder for additive manufacturing described above, additively manufactured objects were produced under the manufacturing conditions shown in Table 2 using Mlab cusing 200R manufactured by GE Additive. No preheating of the base plate was performed during manufacturing.

[Table 1]

| Sample No. | Chemical composition (mass%) | | | | | | | | | Pcm | Remarks |
|---|---|---|---|---|---|---|---|---|---|---|---|
| | C | Si | Mn | Cr | Mo | v | Ni | Cu | Remainder | | |
| 1 | 0.18 | 0.10 | 0.65 | 4.10 | 2.37 | 0.61 | <0.01 | <0.01 | Fe and una-voidable im-purities | 0.64 | Example of the present invention |
| 2 | 0.36 | 0.35 | 0.62 | 3.96 | 2.30 | 0.72 | <0.01 | <0.01 | Fe and una-voidable im-purities | 0.83 | Comparative example |
| 3 | 0.09 | 0.10 | 0.65 | 4.15 | 2.37 | 0.61 | <0.01 | <0.01 | Fe and una-voidable im-purities | 0.55 | |

※Among unavoidable impurities, P ≦ 0.030%, S ≦ 0.020%, Al ≦ 0.04%, Ca ≦ 0.01%, Mg ≦ 0.01%, O ≦ 0.05%, N ≦ 0.05%, and B ≦ 0.05%.

[Table 2]

| Condition No. | Laser output [W] | Scanning speed [mm/s] | Layering thickness [μm] | Scanning pitch [mm] |
|---|---|---|---|---|
| 11 | 170 | 450 | 30 | 0.08 |
| 12 | 170 | 550 | 30 | 0.08 |
| 13 | 170 | 650 | 30 | 0.08 |
| 14 | 170 | 850 | 30 | 0.08 |
| 15 | 170 | 1050 | 30 | 0.08 |
| 16 | 180 | 450 | 30 | 0.08 |
| 17 | 180 | 550 | 30 | 0.08 |
| 18 | 180 | 650 | 30 | 0.08 |
| 19 | 180 | 850 | 30 | 0.08 |
| 20※ | 180 | 1050 | 30 | 0.08 |
| 21 | 190 | 450 | 30 | 0.08 |
| 22 | 190 | 550 | 30 | 0.08 |

(continued)

| Condition No. | Laser output [W] | Scanning speed [mm/s] | Layering thickness [μm] | Scanning pitch [mm] |
|---|---|---|---|---|
| 23 | 190 | 650 | 30 | 0.08 |
| 24 | 190 | 850 | 30 | 0.08 |
| 25 | 190 | 1050 | 30 | 0.08 |
| 26 | 200 | 450 | 30 | 0.08 |
| 27 | 200 | 550 | 30 | 0.08 |
| 28 | 200 | 650 | 30 | 0.08 |
| 29 | 200 | 850 | 30 | 0.08 |
| 30 | 200 | 1050 | 30 | 0.08 |
| ※Not performed only for Sample No.2 | | | | |

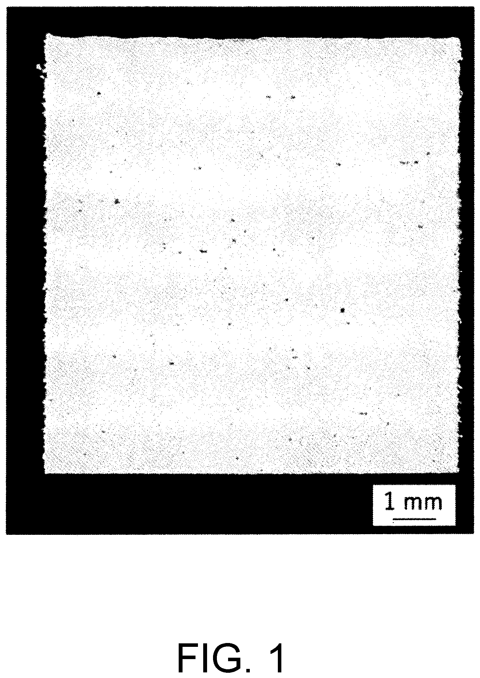

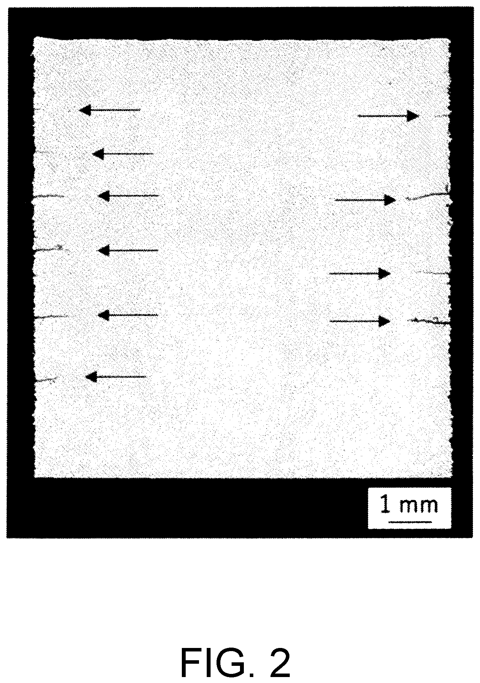

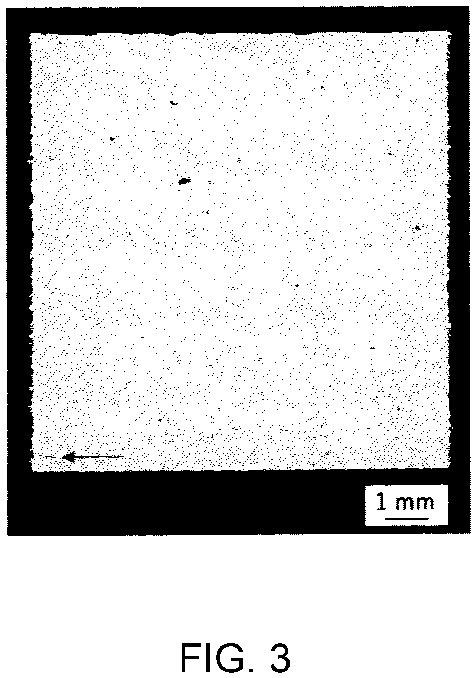

First, cracks in the additively manufactured objects of 10 mm length × 10 mm width × 11 mm height were confirmed by cross-sectional observation. Cracks were confirmed in the manufactured object of Sample No. 2 under all manufacturing conditions for manufacturing No. 11 to 30. For Sample No. 3, cracks were confirmed under manufacturing conditions No. 11, 12, 16, 17, 21, and 28. As examples, FIG. 1, FIG. 2, and FIG. 3 respectively show observation images of cross-sections parallel to the layering direction (that is, cross-sections including the layering interface) in the manufactured objects of Samples No. 1, No. 2, and No. 3 manufactured under condition No. 28. Cracks from the surface can be confirmed at the positions indicated by arrows in No. 2 and No. 3, but no cracks were found in No. 1 of the example of the present invention, which has an alloy composition within the range of the present invention and a Pcm of 0.65 or less. From the above, it was confirmed that the additively manufactured object of the present invention has improved crack resistance.

(Example 2)

Next, various mechanical properties of the additively manufactured object of the present invention were evaluated. Gas atomized powder having the alloy composition of Sample No. 1 obtained by the same manufacturing method as in Example 1 was prepared. Then, using M290 manufactured by EOS, an additively manufactured object of the example of the present invention (Sample No. 4) was produced under additive manufacturing conditions with laser output: 300 W, scanning speed: 800 mm/s, and layering thickness: 04 mm. In addition, a steel ingot having a component composition equivalent to Sample No. 1 was melted and cast, and processing of hot forging was applied to produce the sample of the comparative example (Sample No. 5). Table 3 shows the component compositions of Sample No. 4 and Sample No. 5. Sample No. 4 was tempered at 550°C and adjusted to a hardness of 44±2 HRC. Sample No. 5 was annealed, then quenched at 900°C, and tempered at 570°C to 575°C to adjust to the same hardness of 44±2 HRC as Sample No. 4. Hardness was measured using a Rockwell hardness tester in accordance with JIS Z 2245. Subsequently, tensile test specimens and Charpy impact test specimens (with notches machined on the side surface in the manufacturing direction) were taken from the obtained Sample No. 4 in the horizontal direction relative to the layering direction, and tensile test specimens and Charpy impact test specimens (with notches machined so that cracks would propagate in the direction of the main processing force on a plane perpendicular to the longitudinal direction of the forged material) were taken from Sample No. 5 in the forging longitudinal direction. Then, room-temperature (22°C) tensile tests, high-temperature (550°C) tensile tests in accordance with JIS Z 2241, and 2 mm U-notch Charpy impact tests in accordance with JIS Z 2242 were conducted on the obtained tensile test specimens.

The obtained results of mechanical properties are shown in Table 4. From the results in Table 4, it was confirmed that the example of the present invention, with test specimens adjusted to a hardness of 44±2 HRC, showed 0.2% proof stress of 960 MPa or more in high-temperature environments, room-temperature reduction of area of 65% or more, and Charpy impact value of 100 J/cm$^2$ or more, indicating better high-temperature strength, room-temperature ductility, and room-temperature toughness compared to the comparative example. One reason for the significant improvement in toughness in the example of the present invention is considered to be the refinement of crystal grain size compared to the melted and cast material of the comparative example. From the above, it was confirmed that the additively manufactured object of the present invention has improved mechanical properties compared to the melted and forged material of the same composition.

[Table 3]

| Sample | | Chemical composition (mass%) | | | | Pcm | | Remarks | | | |
|---|---|---|---|---|---|---|---|---|---|---|---|
| No. | C | Si | Mn | Cr | Mo | v | Ni | Cu | Remainder | | |
| 4 | 0.16 | 0.09 | 0.58 | 4.06 | 2.42 | 0.60 | 0.01 | < 0.01 | Fe and unavoidable impurities | 0.62 | Example of the present invention |
| 5 | 0.18 | 0.09 | 0.63 | 4.11 | 2.35 | 0.59 | < 0.01 | < 0.01 | Fe and unavoidable impurities | 0.64 | Comparative example |

※Among unavoidable impurities, P $\leqq$ 0.030%, S $\leqq$ 0.020%, Al $\leqq$ 0.04%, Ca $\leqq$ 0.01%, Mg $\leqq$ 0.01%, O $\leqq$ 0.05%, N $\leqq$ 0.05%, and B $\leqq$ 0.05%.

[Table 4]

| Sample No. | 550°C-0.2% proof stress [MPa] | Room-temperature reduction of area [%] | Charpy impact value [J/cm$^2$] | Remarks |
|---|---|---|---|---|
| 4 | 969 | 67.3 | 155.7 | Example of the present invention |
| 5 | 813 | 59.4 | 7.4 | Comparative example |

## Claims

1. Hot work tool steel powder for additive manufacturing, comprising, by mass%, C: 0.10% to 0.25%, Si: 0.01% to 0.5%, Mn: 1.5% or less, Cr: 3.0% to 6.0%, one or two of Mo and W according to a relationship formula (Mo + 1/2W): 2.0% to 3.5%, V: 0.3% to 0.7%, Ni: 0% to 0.5%, Cu: 0% to 0.25%, and a remainder: Fe and unavoidable impurities, and further satisfying following formula (1),

$$\text{formula (1): } C + Si/30 + (Mn + Cr + Cu)/20 + Ni/60 + (Mo + 1/2W)/15 + V/10 \leqq 0.75,$$

where each element symbol in formula (1) represents a content (mass%) of the element.

2. An additively manufactured hot work tool steel object, comprising, by mass%, C: 0.10% to 0.25%, Si: 0.01% to 0.5%, Mn: 1.5% or less, Cr: 3.0% to 6.0%, one or two of Mo and W according to a relationship formula (Mo + 1/2W): 2.0% to 3.5%, V: 0.3% to 0.7%, Ni: 0% to 0.5%, Cu: 0% to 0.25%, and a remainder: Fe and unavoidable impurities, and further satisfying following formula (1),

$$\text{formula (1): } C + Si/30 + (Mn + Cr + Cu)/20 + Ni/60 + (Mo + 1/2W)/15 + V/10 \leqq 0.75,$$

where each element symbol in formula (1) represents a content (mass%) of the element.

FIG. 1

FIG. 2

FIG. 3

## INTERNATIONAL SEARCH REPORT

| International application No. |
|---|
| **PCT/JP2023/034368** |

**A.    CLASSIFICATION OF SUBJECT MATTER**

*B22F 1/00*(2022.01)i; *B22F 10/28*(2021.01)i; *B22F 10/64*(2021.01)i; *B22F 10/66*(2021.01)i; *B33Y 70/00*(2020.01)i; *B33Y 80/00*(2015.01)i; *C22C 33/02*(2006.01)i; *C22C 38/00*(2006.01)i; *C22C 38/46*(2006.01)i

FI:    B22F1/00 T; B22F10/28; B22F10/64; B22F10/66; B33Y70/00; B33Y80/00; C22C33/02 B; C22C38/00 301Z; C22C38/46

According to International Patent Classification (IPC) or to both national classification and IPC

**B.    FIELDS SEARCHED**

Minimum documentation searched (classification system followed by classification symbols)

B22F1/00; B22F10/28; B22F10/64; B22F10/66; B33Y70/00; B33Y80/00; C22C33/02; C22C38/00; C22C38/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-145407 A (DAIDO STEEL CO., LTD.) 12 August 2016 (2016-08-12)<br>paragraphs [0001], [0025], [0052], [0053], [0056], table 1 | 1-2 |
| A | JP 2019-504197 A (UDDEHOLMS AB) 14 February 2019 (2019-02-14)<br>entire text | 1-2 |
| A | JP 2017-507251 A (ROVALMA, S.A.) 16 March 2017 (2017-03-16)<br>entire text | 1-2 |
| A | JP 2015-221933 A (DAIDO STEEL CO., LTD.) 10 December 2015 (2015-12-10)<br>entire text | 1-2 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034368**

| Patent document cited in search report | | | Publication date (day/month/year) | Patent family member(s) | | Publication date (day/month/year) |
|---|---|---|---|---|---|---|
| JP | 2016-145407 | A | 12 August 2016 | US 2016/0215375 A1 paragraphs [0001], [0040]-[0043], [0087], [0094], table 1 | | |
| | | | | EP 3050649 A1 | | |
| | | | | CA 2918775 A | | |
| | | | | CN 105821327 A | | |
| JP | 2019-504197 | A | 14 February 2019 | US 2019/0003021 A1 entire text | | |
| | | | | WO 2017/111680 A1 | | |
| | | | | EP 3394309 A1 | | |
| | | | | TW 201726942 A | | |
| | | | | CA 3009044 A | | |
| | | | | CN 108474085 A | | |
| | | | | MX 2018007563 A | | |
| | | | | BR 112018012850 A | | |
| | | | | KR 10-2019-0034491 A | | |
| | | | | RU 2018126761 A | | |
| | | | | SE 1551702 A1 | | |
| JP | 2017-507251 | A | 16 March 2017 | US 2016/0348222 A1 entire text | | |
| | | | | WO 2015/110668 A2 | | |
| | | | | EP 3099440 A2 | | |
| | | | | CA 2937998 A | | |
| | | | | AU 2015208035 A | | |
| | | | | CN 106029267 A | | |
| | | | | KR 10-2016-0113261 A | | |
| JP | 2015-221933 | A | 10 December 2015 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019220917 A
- JP 2016145407 A